# FASCICULE DE BREVET EUROPEEN

(11) **EP 1 236 352 B1**
(45) Date de publication et mention de la délivrance du brevet: **04.02.2004**
(21) Numéro de dépôt: 00981422.9
(22) Date de dépôt: 15.11.2000
(51) Int. Cl.: H04N 7/16

(54) **PROCEDE DE DIFFUSION DE TELEVISION NUMERIQUE, SIGNAL NUMERIQUE ET EQUIPEMENT ASSOCIES**
DIGITALFERNSEHRUNDFUNKVERFAHREN, ENTSPRECHENDES DIGITALSIGNAL UND ENTSPRECHENDE VORRICHTUNG
METHOD FOR DIGITAL TELEVISION BROADCASTING, DIGITAL SIGNAL AND RELATED EQUIPMENT

(30) Priorité: 01.12.1999 FR 9915235
(43) Date de publication de la demande: 04.09.2002
(73) Titulaire: FRANCE TELECOM SA, 75015 Paris (FR); TELEDIFFUSION DE FRANCE, société anonyme, 75015 Paris (FR)
(72) Inventeur: BLUSSEAU, Floriane, F-35235 Thorigne Fouillard (FR); GESLIN, Franck, F-35000 Rennes (FR)
(74) Mandataire: Maillet, Alain
(86) Numéro de dépôt international: PCT/FR2000/003192
(87) Numéro de publication internationale: WO 2001/041439

(56) Documents cités:
- US-A- 5 630 119
- US-A- 5 809 204
- US-A- 6 005 631

## Description

La présente invention concerne, selon l'un de ses aspects, un procédé de diffusion de télévision numérique dans lequel un émetteur transmet à destination d'une pluralité de récepteurs des signaux multiplexés constituant un bouquet de services télévisuels, les signaux transmis comprenant des signaux principaux exploitables par chaque récepteur pour délivrer des émissions télévisées à un téléspectateur, et des signaux annexes exploitables par chaque récepteur pour fournir au téléspectateur des informations sur les émissions télévisées.

Plus précisément, la présente invention concerne notamment un procédé de ce type, dans lequel les signaux annexes codent des données annexes comprenant des descripteurs organisés en ensembles dont chacun est relatif à une émission télévisée et contient diverses catégories de descripteurs, dans lequel ces ensembles de descripteurs sont sélectivement rendus accessibles au téléspectateur suivant l'un quelconque d'au moins deux modes d'accès possibles respectivement définis par des première et seconde classifications hiérarchisées différentes des diverses catégories de descripteurs, et dans lequel les ensembles de descripteurs forment une base de données dans laquelle les descripteurs sont classés par catégorie suivant la première classification hiérarchisée.

Un procédé de diffusion de télévision numérique répondant à cette définition générique est décrit dans les normes et standards ISO MPEG2 et ETSI Service Information, notamment détaillés dans les documents ISO/IEC 13818-1 : "Information Technology - Generic coding of moving pictures and associated audio recommendation H.222.0 (systems)", EN 300 468 : "Digital video broadcasting (DVB) - Specification for Service Information (SI) in DVB systems", et ETR 211 : "Digital video broadcasting (DVB) - Guidelines on implementation and usage of service information".

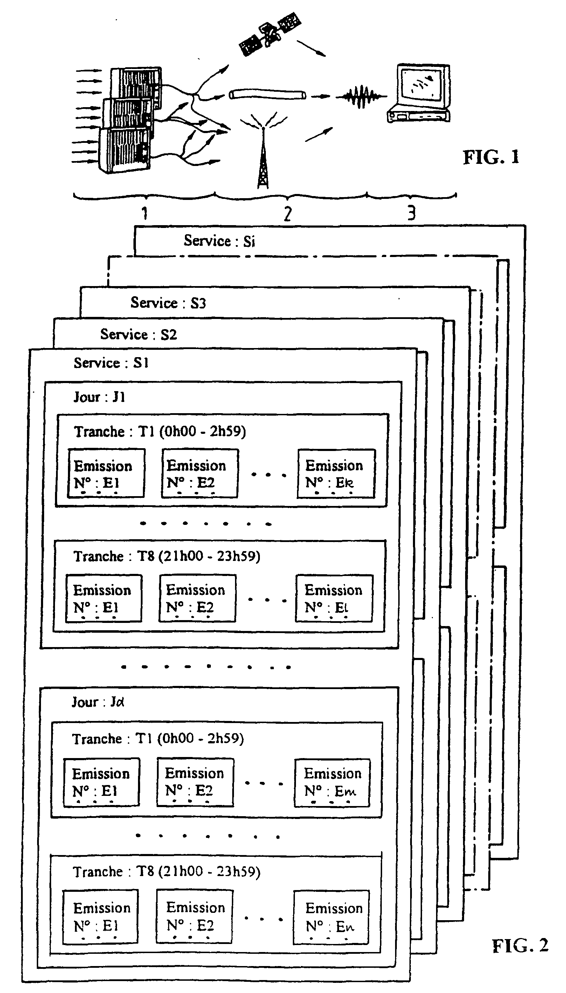

Le schéma de la Fig. 1 représente les différents éléments mis en oeuvre pour la diffusion de services et de programmes de télévision numérique.

Le point d'émission 1 est constitué par l'ensemble des équipements permettant de multiplexer des flux de messages audio, vidéo et de données, afin de constituer des services de télévision numérique codés conformément aux normes MPEG2/ETSI.

Ces services sont diffusés par l'intermédiaire de multiplex MPEG2 Transport (MPEG2 TS), chaque multiplex pouvant traiter jusqu'à une dizaine de services.

Le réseau de diffusion 2 est constitué par l'ensemble des équipements permettant de diffuser par satellite, câble ou réseau hertzien terrestre, les signaux multiplexés élaborés par le point d'émission, le nombre de multiplex variant selon le type de réseau et pouvant aller jusqu'à une cinquantaine pour un réseau câblé.

Le récepteur ou terminal de réception 3 est constitué par l'équipement permettant de décoder les signaux transitant sur un réseau de diffusion donné, et de présenter à l'utilisateur l'offre de services de télévision numérique.

Dans la mesure où les techniques utilisées dans le monde numérique autorisent la diffusion d'une quantité très importante de services télévisuels, il est opportun d'accompagner ces services de données descriptives utilisées par des applications de type dit "EPG" ou encore "Electronic Program Guide", c'est-à-dire "Guide Electronique de Programmes", pour aider l'utilisateur à sélectionner un programme au sein de l'offre présentée.

Ces données annexes ou "d'accompagnement" remplissent un rôle équivalent à celui d'un magazine de télévision, et ont donc au moins pour fonction de décrire, pour chaque service télévisuel, la programmation des émissions en cours et à venir, ainsi que leur contenu.

Dans la mesure où les descripteurs que contiennent ces données annexes sont relatifs à diverses catégories d'informations, et doivent notamment permettre d'identifier quels services offrent quelles émissions, à quelle date et à quelle heure sont diffusées quelles émissions, quelles émissions concernent quels thèmes, etc., il est utile que chaque téléspectateur puisse avoir un accès à ces descripteurs suivant plusieurs modes d'accès possibles, correspondant à des classements hiérarchisés différents des diverses catégories de descripteurs, et par exemple suivant l'ordre chronologique ou suivant une classification par thème, selon que le téléspectateur souhaite savoir quelles émissions sont disponibles à un moment donné, ou qu'il souhaite savoir à quel moment il pourra capter une émission sur son thème favori.

Les descripteurs étant organisés en ensembles dont chacun est relatif à une émission télévisée, les ensembles de descripteurs forment une base de données dans laquelle les descripteurs sont classés par catégorie suivant une classification hiérarchisée choisie par défaut.

Par exemple, la norme EN 300 468 définit pour cette base de données une structure qui suppose que le récepteur présente les informations de façon chronologique.

Une telle structure, qui est schématisée sur la Fig. 2, facilite donc pour le récepteur un accès chronologique à la base de données.

Ainsi par exemple, pour présenter au téléspectateur toutes les émissions du lendemain à 20h30, le récepteur accédera directement, pour tous les services, à la tranche horaire N° 7 (18h-20h59) du jour suivant, et affichera toutes les informations relatives aux émissions qu'il a rencontrées à cet endroit, en cours à 20h30.

La quantité de données annexes nécessaires pour décrire un service sur une profondeur d'un jour peut être estimée à 13.4 kilooctets.

En reprenant les hypothèses précédemment évoquées du nombre de services par multiplex (10) et du nombre de multiplex par réseau (50), on peut facilement estimer à environ 6.5 mégaoctets le volume de la base de données annexes pour une profondeur de description d'un seul jour, et à environ 26 mégaoctets le volume de cette base pour une profondeur de description de 4 jours.

Le problème à résoudre consiste à traiter cette masse d'informations de manière à permettre de prendre connaissance, sur un même récepteur, de l'ensemble de l'offre de services suivant plusieurs modes d'accès, c'est-à-dire non pas seulement selon l'ordre chronologique par exemple, mais également sous d'autres formes de présentations telles qu'un classement thématique ou un classement par type d'abonnement.

Trois voies de solutions sont connues à ce jour.

La première consiste à émettre la base de données annexes et à réaliser le tri de cette base dans chaque récepteur pour permettre l'affichage des descripteurs des émissions télévisées suivant le mode d'accès spécifique choisi par le téléspectateur.

Compte tenu du volume de la base de données, cette solution est très coûteuse en traitement d'informations pour le récepteur.

Ainsi, soit le récepteur est doté d'une importante puissance de traitement, auquel cas son coût matériel est élevé, soit le récepteur n'est doté que d'une puissance de traitement moyenne, auquel cas le temps d'attente pour l'obtention, par le téléspectateur, de la présentation de l'offre de services sous la forme qu'il a choisie devient inacceptable.

La seconde voie consiste à diffuser toutes les combinatoires possibles de la même base de données, en variant à chaque fois la hiérarchie des catégories de descripteurs inclus dans cette base, de manière que le récepteur reçoive directement l'information dans l'ordre dans lequel il doit la restituer.

Compte tenu du volume de chaque base de données, cette solution est cependant très coûteuse en bande passante lors de la diffusion.

La troisième voie, notamment cumulable avec la seconde, consiste à ne diffuser les descripteurs relatifs qu'à une partie seulement de l'offre de services, cette solution étant cependant, à l'évidence, intrinsèquement non satisfaisante.

Dans ce contexte, la présente invention a pour but de rendre disponible, sur un même récepteur, l'ensemble de l'offre de services suivant plusieurs modes d'accès différents, tout en tenant compte des faibles capacités de traitement des récepteurs, et tout en limitant l'augmentation du flux des informations diffusées.

Le procédé de l'invention, par ailleurs conforme à la définition générique qu'en donne le préambule ci-dessus, est essentiellement caractérisé en ce que les données annexes comprennent, outre la base de données dans laquelle les descripteurs sont classés par catégorie suivant la première classification hiérarchisée, au moins une première table de données redondantes incluant des sous-ensembles respectifs de tous les ensembles de descripteurs et excluant les descripteurs d'au moins une catégorie, les descripteurs de ces sous-ensembles étant, dans cette première table, classés par catégorie suivant la seconde classification hiérarchisée.

Dans le cas où tous les descripteurs doivent être rendus disponibles par l'accès aux descripteurs classés par catégorie suivant la seconde classification hiérarchisée de façon automatique, c'est-à-dire sans exiger la moindre recherche de la part du téléspectateur, le récepteur extrait de la base de données les descripteurs de chaque catégorie non représentée dans la première table de données redondantes en utilisant comme coordonnées de lecture dans la base de données une partie au moins des descripteurs inclus dans cette première table de données redondantes.

Si l'on appelle premier et second formats maximaux les formats maximaux, longueurs maximales, ou volumes maximaux que présentent respectivement les descripteurs de la première table de données redondantes et ceux de la base de données qui sont exclus de la première table de données redondantes, on choisit de préférence les descripteurs inclus dans la première table de données redondantes et ceux qui en sont exclus de manière que le second format maximal soit supérieur au premier format maximal, les descripteurs exclus de la première table de données redondantes comprenant notamment, par exemple, les résumés des émissions télévisées.

Compte tenu à la fois de l'utilité prépondérante des données chronologiques et de l'intérêt de disposer directement des données sous celle de leurs formes qui est le plus souvent demandée, les descripteurs de la base de données sont avantageusement classés par service télévisuel et par ordre chronologique

La seconde classification hiérarchisée peut par exemple utiliser le thème de l'émission ou le type d'abonnement en tant que catégorie de descripteur de plus haute hiérarchie.

Le procédé de l'invention peut aussi être mis en oeuvre en utilisant autant de tables de données redondantes que de modes d'accès possibles des ensembles de descripteurs qu'on souhaite offrir au téléspectateur en plus du mode d'accès défini par la première classification hiérarchisée.

L'invention concerne donc également un signal numérique comprenant de façon connue en soi des signaux multiplexés transmis à destination d'une pluralité de recepteurs et constituant un bouquet de services télévisuels, les signaux transmis comprenant des signaux principaux exploitables par chaque récepteur pour délivrer des émissions télévisées à un téléspectateur, et des signaux annexes exploitables par chaque récepteur pour fournir au téléspectateur des informations sur les émissions télevisées, les signaux annexes codant des données annexes comprenant des descripteurs organisés en ensembles dont chacun est relatif à une émission télévisée et contient diverses catégories de descripteurs, ces ensembles de descripteurs étant sélectivement rendus accessibles au téléspectateur suivant l'un quelconque d'au moins deux modes d'accès possibles respectivement définis par des première et seconde classifications hiérarchisées différentes des diverses catégories de descripteurs, et les ensembles de descripteurs formant une base de données dans laquelle les descripteurs sont classés par catégorie suivant la première classification hiérarchisée, ce signal étant caractérisé en ce que les données annexes comprennent en outre au moins une première table de données redondantes incluant des sous-ensembles respectifs de tous les ensembles de descripteurs et excluant les descripteurs d'au moins une catégorie, les descripteurs de ces sous-ensembles étant, dans cette première table, classés par catégorie suivant la seconde classification hiérarchisée.

De préférence, une partie au moins des descripteurs inclus dans la première table de données redondantes de ce signal constituent des coordonnées de lecture, permettant d'extraire de la base de données les descripteurs de chaque catégorie non représentée dans la première table de données redondantes.

Ce signal est en outre avantageusement constitué de manière que les descripteurs de la première table de données redondantes aient un format maximal inférieur au format maximal des descripteurs de la base de données qui sont exclus de cette première table de données redondantes.

Les descripteurs de la base de données sont par exemple classés par service télévisuel et par ordre chronologique, les résumés des émissions télévisées faisant de préférence partie des descripteurs exclus de la première table de données redondantes.

La seconde classification hiérarchisée peut par exemple utiliser le thème de l'émission ou le type d'abonnement en tant que catégorie de descripteur de plus haute hiérarchie, le signal multiplexé pouvant aussi comporter plusieurs tables de données redondantes pour offrir au téléspectateur autant de modes d'accès possibles des ensembles de descripteurs, en plus du mode d'accès défini par la première classification hiérarchisée.

Enfin, l'invention concerne également un équipement de réseau de télévision numérique, défini par le fait qu'il comprend des moyens propres à produire et émettre, et/ou des moyens propres à recevoir et traiter, un signal numérique tel que précédemment décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma synoptique représentant dans son ensemble le processus de diffusion de télévision numérique, selon les techniques en vigueur à ce jour;
La Fig. 2 est une représentation schématique de la structure d'une base de données dont les descripteurs sont hiérarchiquement classés par service, par jour, et par tranche horaire de 3 heures;
La Fig. 3 représente un agrandissement d'une partie de la Fig. 2;
La Fig. 4 est un détail représentant une instance d'une partie de la Fig. 3;
La Fig. 5 est une représentation schématique de la structure d'une table de données redondantes telle que mise en oeuvre dans la présente invention; et
La Fig. 6 est une représentation schématique de la structure d'une base de données reconstituée à partir de la base de données de la Fig. 2 au moyen de la table de la Fig. 5 et dont les descripteurs sont hiérarchiquement classés par thème, par service, par jour, et par tranche horaire de 3 heures.

Comme mentionné précédemment, l'invention concerne une technique de diffusion de télévision numérique, dans laquelle un émetteur 1 (Fig. 1) transmet à destination d'une pluralité de récepteurs, tels que 3, des signaux multiplexés qui constituent un bouquet de services télévisuels.

De façon connue en soi, les signaux transmis comprennent des signaux principaux exploitables par chaque récepteur pour délivrer des émissions télévisées à un téléspectateur, et des signaux annexes exploitables par chaque récepteur pour fournir au téléspectateur des informations sur les émissions télévisées.

Les signaux annexes codent des données annexes qui comprennent des descripteurs organisés en ensembles, chaque ensemble de descripteurs étant relatif à une émission télévisée et contenant diverses catégories de descripteurs.

Les Figs. 2 à 6 donnent des exemples non limitatifs de ces catégories de descripteurs, à savoir : "Service", "Jour", "Tranche", "Emission N°", "Nom de l'émission", "Heure de début", "Durée", "Résumé / Casting", "Thème", "Code Parental" et "Type d'abonnement".

Plus précisément, "Service" est le nom de la constante que constitue la catégorie de descripteurs relatifs à l'identification du service sur lequel une émission donnée est disponible.

"Jour" est le nom de la constante que constitue la catégorie de descripteurs relatifs à l'identification du jour de diffusion d'une émission donnée.

"Tranche" est le nom de la constante que constitue la catégorie de descripteurs relatifs à l'identification du numéro de la tranche horaire de 3 heures au cours de laquelle est diffusée une émission donnée.

"Emission N°" est le nom de la constante que constitue la catégorie de descripteurs relatifs à l'ordre de diffusion d'une émission donnée à l'intérieur d'une tranche horaire. Etc.

Chaque émission est ainsi totalement identifiée par l'ensemble des valeurs que prennent les descripteurs dans chacune de ces catégories, ces valeurs étant donc variables d'une émission à l'autre.

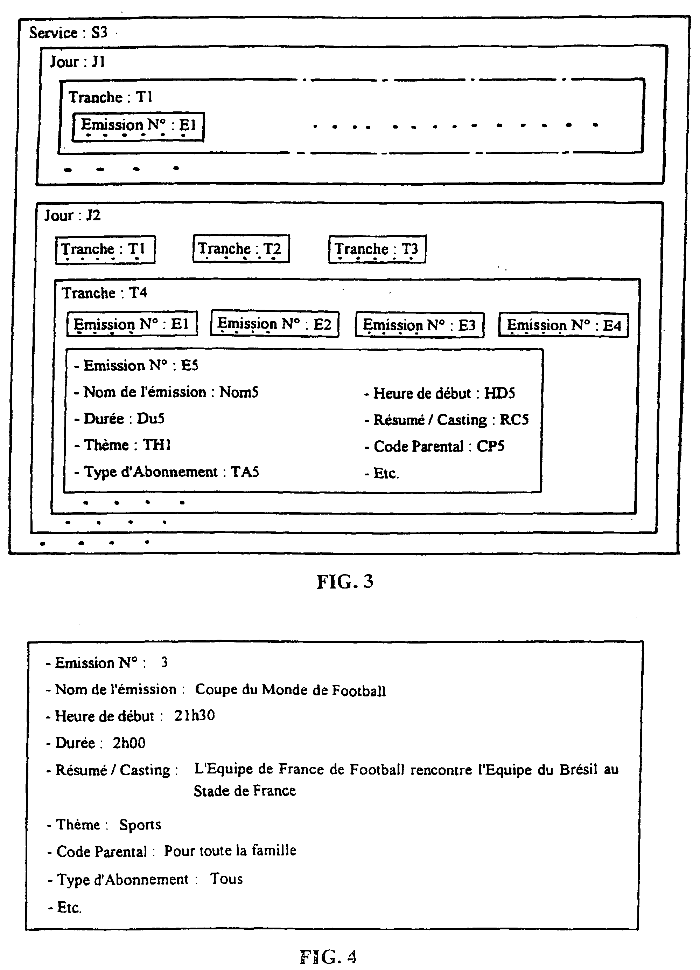

Les descripteurs qui permettent concrètement d'identifier, de manière univoque, une émission donnée, et qui, dans l'exemple de la Fig. 4, prennent des valeurs telles que "3", "La Coupe du Monde de Football", "21h30", "2h00", "L'Equipe de France rencontre l'Equipe du Brésil au Stade de France", etc., sont donc des valeurs instanciées des variables que représentent, dans leur généralité, les descripteurs de diverses catégories.

Sur les Figs. 2 et 3, qui représentent des structures de données non instanciées, les noms tels que "S1", "S2", "S3", "Si", "J1", "Jd", "T1", "T8", "E1", "E2", "E5". "Ek", "El", "Em", "En", "Nom5", "HD5", "Du5", "RC5", "TH1", "CP5", "TA5", etc. sont donc des noms des variables que représentent, dans leur généralité, des descripteurs de diverses catégories.

Plus précisément, "S1", "S2", et "Si" sont des noms de variables relatives à la catégorie de descripteurs "Service".

"J1" et "Jd" sont des noms de variables relatives à la catégorie de descripteurs "Jour".

"T1" et "T8" sont des noms de variables relatives à la catégorie de descripteurs "Tranche".

"E1", "E2", "Ek", "El", "Em", et "En" sont des noms de variables relatives à la catégorie de descripteurs "Emission N°".

"Nom5" est un nom de variable relative à la catégorie de descripteurs "Nom de l'émission". Etc.

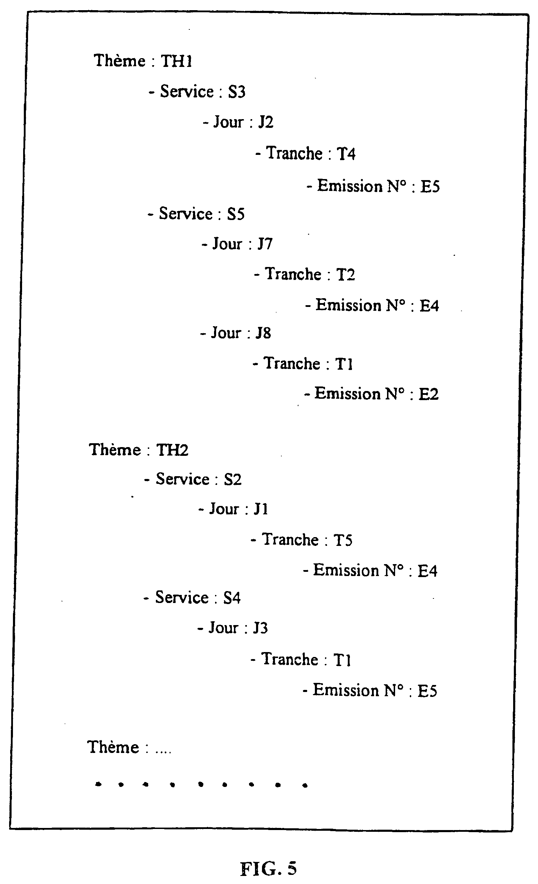

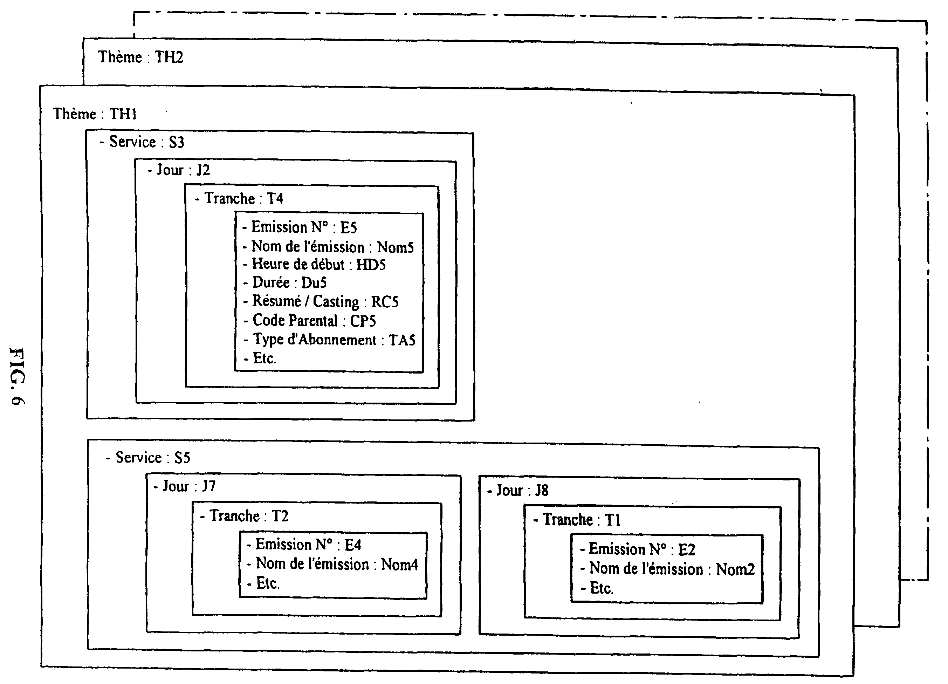

Enfin sur la Fig. 5, qui représente la structure d'une table de données redondantes conformément à l'enseignement de l'invention, et sur la Fig. 6, qui représente la structure d'une base de données reconstituée conformément à l'enseignement de l'invention, les noms tels que "TH1", "S3", "J2", "T4", "E5", "S5", "J1", "T2", "E4", etc. sont encore des noms des variables que représentent, dans leur généralité, des descripteurs de diverses catégories, mais dont les valeurs, bien que non instanciées sur ces figures, sont supposées refléter les valeurs instanciées que prennent concrètement des descripteurs donnés dans une occurrence particulière de la base de données dont la structure générale est illustrée sur la Fig. 2 et détaillée, dans une de ses parties, à la Fig. 3.

L'objectif de l'invention, connu en lui-même, consiste à rendre les ensembles de descripteurs, qui servent à renseigner le téléspectateur sur les émissions télévisées, sélectivement accessibles à ce téléspectateur suivant l'un quelconque de plusieurs modes d'accès possibles, tels qu'illustrés aux Figs. 2 et 6, et qui sont définis par des classifications hiérarchisées différentes des diverses catégories de descripteurs.

De façon également connue, l'invention prévoit la transmission, par l'émetteur vers tous les récepteurs, d'une base de données formée par les ensembles de descripteurs dont chacun documente une émission, ces descripteurs étant, dans cette base de données, classés par catégorie suivant une classification hiérarchisée donnée.

Par exemple, la Fig. 2 illustre le cas d'application privilégié de l'invention, conforme à la norme EN 300 468, dans lequel les descripteurs de la base de données sont classés par service télévisuel et par ordre chronologique.

Selon l'invention, les données annexes transmises de l'émetteur vers l'ensemble des récepteurs comprennent, en plus de la base de données illustrée à la Fig. 2, au moins une table de données redondantes, telle qu'illustrée à la Fig. 5, qui inclut des sous-ensembles respectifs de tous les ensembles de descripteurs tout en excluant les descripteurs d'au moins une catégorie, et dans laquelle les descripteurs de ces sous-ensembles sont classés par catégorie suivant une classification hiérarchisée différente de celle selon laquelle sont agencés les descripteurs de la base de données.

Comme le montre la Fig. 5, les descripteurs de la table illustrée sont relatifs aux catégories "Thème", "Service", "Jour", "Tranche". "Emission N°", mais ne contiennent aucun représentant des catégories "Nom de l'émission", "Heure de début", "Durée", "Résumé / Casting", "Code Parental", ni "Type d'Abonnement".

Dans la mesure où chaque table de données redondantes ne reprend que des sous-ensembles des ensembles de descripteurs de la base de données, la diffusion de cette table est moins coûteuse, en bande passante, que la diffusion d'une copie réarrangée de la base de données elle-même.

De façon plus générale, il est fait en sorte que le volume des données reprises dans la table de données redondantes, ou de chaque table de données redondantes, soit sensiblement plus restreint que le volume des données exclues de cette table.

En particulier, le format le plus important que présentent les descripteurs repris dans la table, ou dans chaque table, est de préférence inférieur, voire très inférieur, au format le plus important que présentent les descripteurs qui sont exclus de cette table.

Néanmoins, chaque table de données redondantes, dans laquelle les descripteurs sont organisés suivant une classification hiérarchisée souhaitée par le téléspectateur et différente de celle qui structure la base de données permet aisément, en corrélation avec cette base de données, de reconstituer une nouvelle base de données complète réarrangée de manière que les descripteurs relatifs aux différentes catégories y soit agencés conformément à la classification hiérarchisée souhaitée par le téléspectateur.

A cette fin, il suffit en effet d'extraire de la base de données les descripteurs de chaque catégorie non représentée dans la table de données en utilisant, comme coordonnées de lecture dans la base de données, une partie au moins des descripteurs inclus dans la table de données redondantes.

Cette opération est rendue visible par l'association des Figs. 3, 5, et 6, la Fig. 6 représentant la structure de la base de données complète obtenue par extraction des données pertinentes de la base de données de la Fig. 2, au moyen des descripteurs de la table de la Fig. 5, utilisés comme adresses pour l'extraction.

Ainsi, pour offrir un mode d'accès thématique de tous les descripteurs, tel que celui que fournit la base reconstituée de la Fig. 6, l'invention utilise la table de données redondantes organisée par thème, telle qu'illustrée à la Fig. 5, pour extraire, ensemble après ensemble, les descripteurs de la base de données organisés chronologiquement (Fig. 2), aux emplacements indiqués par la table de données redondantes (Fig. 5).

En reprenant les hypothèses initiales du nombre de services par multiplex (10) et du nombre de multiplex par réseau (50), la quantité de données d'une table de données redondantes pour une classification hiérarchisée donnée peut être estimée à environ 100 kilooctets pour une profondeur de description d'un jour, la diffusion d'une telle table étant donc 65 fois moins coûteuse que la diffusion d'une nouvelle base de données.

En résumé, lorsque le mode d'accès sélectionné par l'utilisateur correspond à la structuration de la base de données, c'est-à-dire correspond dans l'exemple de la Fig. 2 à une présentation chronologique des émissions, le récepteur acquiert dans le signal composite MPEG2 TS qu'il reçoit tout ou partie de cette base de données afin de présenter directement à l'utilisateur les descripteurs qu'elle contient.

Lorsque le mode d'accès sélectionné par l'utilisateur ne correspond pas à la structuration de la base de données, et correspond par exemple à une présentation thématique des émissions, le récepteur :
- acquiert dans le signal composite MPEG2 TS reçu la table de données redondantes relative au mode d'accès choisi par l'utilisateur, c'est-à-dire en l'occurrence la table des thèmes,
- extrait de la table de données les emplacements des descripteurs donnant les informations détaillées sur les émissions concernées (clés constituées par exemple du jour et de la tranche horaire de diffusion des émissions associées au thème correspondant), et
- accède, grâce à ces emplacements, directement aux descripteurs recherchés dans la base de données complète, acquise dans le signal composite MPEG2 TS, afin de les présenter à l'utilisateur.

Dans les deux cas, deux stratégies de mise en oeuvre au sein du récepteur peuvent être envisagées, à savoir un accès direct aux informations dans le flux des signaux reçus, ou la mise en place d'un mécanisme de caches dans le récepteur pour optimiser le temps d'accès aux informations.

En conclusion, l'invention présente l'avantage de ne requérir ni la mise en oeuvre d'un algorithme complexe de tri ou de ressources accrues de traitement d'informations, ni la diffusion de volumes importants de données.

## Revendications

1. Procédé de diffusion de télévision numérique, dans lequel un émetteur (1) transmet à destination d'une pluralité de récepteurs (3) des signaux multiplexés constituant un bouquet de services télévisuels, les signaux transmis comprenant des signaux principaux exploitables par chaque récepteur pour délivrer des émissions télévisées à un téléspectateur, et des signaux annexes exploitables par chaque récepteur pour fournir au téléspectateur des informations sur les émissions télévisées, les signaux annexes codant des données annexes comprenant des descripteurs organisés en ensembles (S1, J1, T1, E1, etc.) dont chacun est relatif à une émission télévisée et contient diverses catégories de descripteurs (Service, Jour, Tranche, Emission, etc.), ces ensembles de descripteurs étant sélectivement rendus accessibles au téléspectateur suivant l'un quelconque d'au moins deux modes d'accès possibles respectivement définis par des première et seconde classifications hiérarchisées différentes (Service, Jour, Tranche, Emission, etc.; Thème, Service, Jour, Tranche, etc.) des diverses catégories de descripteurs, procédé dans lequel les ensembles de descripteurs forment une base de données (Fig. 2) dans laquelle les descripteurs sont classés par catégorie suivant la première classification hiérarchisée, **caractérisé en ce que** les données annexes comprennent en outre au moins une première table de données redondantes (Fig. 5) incluant des sous-ensembles respectifs (TH1, S3, J2, T4, E5) de tous les ensembles de descripteurs et excluant les descripteurs (Nom5, Du5, etc.) d'au moins une catégorie, les descripteurs de ces sous-ensembles étant, dans cette première table, classés par catégorie suivant la seconde classification hiérarchisée (Thème, Service, Jour, Tranche, etc.).

2. Procédé suivant la revendication 1, **caractérisé en ce que**, pour rendre les ensembles de descripteurs accessibles au téléspectateur suivant le second mode d'accès possible, on extrait de la base de données les descripteurs de chaque catégorie non représentée dans la première table de données redondantes en utilisant comme coordonnées de lecture dans la base de données une partie au moins des descripteurs inclus dans cette première table de données redondantes.

3. Procédé suivant la revendication 1 ou 2, **caractérisé en ce que** les descripteurs de la première table de données redondantes ont un premier format maximal, **en ce que** les descripteurs de la base de données exclus de la première table de données redondantes ont un second format maximal, et **en ce que** le second format maximal est supérieur au premier format maximal.

4. Procédé suivant l'une quelconque des revendications précédentes, **caractérisé en ce que** les descripteurs de la base de données sont classés par service télévisuel et par ordre chronologique.

5. Procédé suivant l'une quelconque des revendications précédentes, **caractérisé en ce que** les descripteurs exclus de la première table de données redondantes comprennent des résumés des émissions télévisées.

6. Procédé suivant l'une quelconque des revendications précédentes, **caractérisé en ce que** la seconde classification hiérarchisée utilise le thème de l'émission en tant que catégorie de descripteur de plus haute hiérarchie.

7. Procédé suivant l'une quelconque des revendications 1 à 5, **caractérisé en ce que** la seconde classification hiérarchisée utilise le type d'abonnement en tant que catégorie de descripteur de plus haute hiérarchie.

8. Procédé suivant l'une quelconque des revendications précédentes, **caractérisé en ce qu'**on utilise plusieurs tables de données redondantes pour offrir au téléspectateur autant de modes d'accès possibles des ensembles de descripteurs, en plus du mode d'accès défini par la première classification hiérarchisée.

9. Signal numérique comprenant des signaux multiplexés transmis à destination d'une pluralité de récepteurs (3) et constituant un bouquet de services télévisuels, les signaux transmis comprenant des signaux principaux exploitables par chaque récepteur pour délivrer des émissions télévisées à un téléspectateur, et des signaux annexes exploitables par chaque récepteur pour fournir au téléspectateur des informations sur les émissions télévisées, les signaux annexes codant des données annexes comprenant des descripteurs organisés en ensembles (S1, J1, T1, E1, etc.) dont chacun est relatif à une émission télévisée et contient diverses catégories de descripteurs (Service, Jour, Tranche, Emission, etc.), ces ensembles de descripteurs étant sélectivement rendus accessibles au téléspectateur suivant l'un quelconque d'au moins deux modes d'accès possibles respectivement définis par des première et seconde classifications hiérarchisées différentes (Service, Jour, Tranche, Emission, etc.; Thème, Service, Jour, Tranche, etc.) des diverses catégories de descripteurs, et les ensembles de descripteurs formant une base de données (Fig. 2) dans laquelle les descripteurs sont classés par catégorie suivant la première classification hiérarchisée, **caractérisé en ce que** les données annexes comprennent en outre au moins une première table de données redondantes (Fig. 5) incluant des sous-ensembles respectifs (TH1, S3, J2, T4, E5) de tous les ensembles de descripteurs et excluant les descripteurs (Nom5, Du5, etc.) d'au moins une catégorie, les descripteurs de ces sous-ensembles étant, dans cette première table, classés par catégorie suivant la seconde classification hiérarchisée (Thème, Service, Jour, Tranche, etc.).

10. Signal suivant la revendication 9, **caractérisé en ce qu'**une partie au moins des descripteurs inclus dans la première table de données redondantes constituent des coordonnées de lecture, permettant d'extraire de la base de données les descripteurs de chaque catégorie non représentée dans la première table de données redondantes.

11. Signal suivant la revendication 9 ou 10, **caractérisé en ce que** les descripteurs de la première table de données redondantes ont un premier format maximal, **en ce que** les descripteurs de la base de données exclus de la première table de données redondantes ont un second format maximal, et **en ce que** le second format maximal est supérieur au premier format maximal.

12. Signal suivant l'une quelconque des revendications 9 à 11, **caractérisé en ce que** les descripteurs de la base de données sont classés par service télévisuel et par ordre chronologique.

13. Signal suivant l'une quelconque des revendications 9 à 12, **caractérisé en ce que** les descripteurs exclus de la première table de données redondantes comprennent des résumés des émissions télévisées.

14. Signal suivant l'une quelconque des revendications 9 à 13, **caractérisé en ce que** la seconde classification hiérarchisée utilise le thème de l'émission en tant que catégorie de descripteur de plus haute hiérarchie.

15. Signal suivant l'une quelconque des revendications 9 à 14, **caractérisé en ce que** la seconde classification hiérarchisée utilise le type d'abonnement en tant que catégorie de descripteur de plus haute hiérarchie.

16. Signal suivant l'une quelconque des revendications 9 à 15, **caractérisé en ce qu'**il comporte plusieurs tables de données redondantes pour offrir au téléspectateur autant de modes d'accès possibles des ensembles de descripteurs, en plus du mode d'accès défini par la première classification hiérarchisée.

17. Equipement (1) de réseau de télévision numérique, comprenant des moyens propres à produire et émettre un signal numérique suivant l'une quelconque des revendications 9 à 16.

18. Equipement (3) de réseau de télévision numérique, **caractérisé en ce qu'**il comprend :
des moyens pour recevoir un signal composite incluant un signal numérique selon l'une quelconque des revendications 9 à 16,
des moyens pour acquérir à partir du signal numérique reçu la table correspondante de données redondantes relatives au mode d'accès choisi par l'utilisateur,
des moyens pour extraire de la table de données redondantes les emplacements des descripteurs, et
des moyens pour accéder, grâce à ces emplacements, directement aux descripteurs recherchés dans la base de données complète, acquise à partir dudit signal reçu, afin de les présenter à l'utilisateur.

19. Equipement (3) de réseau de télévision numérique selon la revendication 18, **caractérisé en ce que** ledit signal composite est un signal au format MPEG2 TS.

## Patentansprüche

1. Verfahren zur digitalen Fernsehausstrahlung, bei dem ein Sender (1) zu einer Vielzahl von Empfängern (3) gemultiplexte Signale sendet, die ein Fernsehdienstangebot bilden, wobei die übertragenen Signale für jeden Empfänger nutzbare Hauptsignale umfassen, um Fernsehsendungen an einen Zuschauer zu übertragen, und Nebensignale, die von jedem Empfänger genutzt werden können, um dem Zuschauer Informationen über die Fernsehsendungen zu liefern, wobei die Nebensignale, die Nebendaten codieren, die in Einheiten (S1, J1, T1, E1 usw.) organisierte Deskriptoren umfassen, von welchen sich jede auf eine Fernsehsendung bezieht und verschiedene Deskriptorenkategorien umfasst (Service, Tag, Tagesabschnitt, Sendung usw.), wobei diese Deskriptoreneinheiten dem Zuschauer selektiv nach einem von mindestens zwei möglichen Zugangsmodi zugänglich gemacht werden, die jeweils von einem ersten und einem zweiten hierarchischen unterschiedlichen Klassement (Service, Tag, Tagesabschnitt, Sendung usw.; Thema, Service, Tag, Tagesabschnitt usw.) der verschiedenen Deskriptorenkategorien definiert werden, Verfahren, bei dem die Deskriptoreneinheiten eine Datenbank (Fig. 2) bilden, in der die Deskriptoren nach Kategorien nach einem ersten hierarchischen Klassement klassiert sind, **dadurch gekennzeichnet, dass** die Nebendaten außerdem mindestens eine erste Tabelle redundanter Daten (Fig. 5) umfassen, darunter entsprechende Untereinheiten (TH1, S3, J2, T4, E5) aller Deskriptoreneinheiten und unter Ausschluss der Deskriptoren (Nom5, Du5 usw.) mindestens einer Kategorie, wobei die Deskriptoren dieser Untereinheiten in dieser ersten Tabelle nach Kategorie gemäß dem zweiten hierarchischen Klassement (Thema, Service, Tag, Tagesabschnitt usw.) klassiert sind.

2. Verfahren nach Anspruch 1, **dadurch gekennzeichnet, dass** zum Zugänglichmachen der Deskriptoreneinheiten für den Zuschauer gemäß dem zweiten möglichen Zugangsmodus aus der Datenbank die Deskriptoren jeder Kategorie extrahiert werden, die in der ersten Tabelle redundanter Daten nicht vertreten sind, indem als Lesekoordinaten in der Datenbank mindestens ein Teil der Deskriptoren verwendet wird, die in dieser ersten Tabelle redundanter Daten enthalten sind.

3. Verfahren nach Anspruch 1 oder 2, **dadurch gekennzeichnet, dass** die Deskriptoren der ersten Tabelle redundanter Daten ein erstes maximales Format haben, dadurch, dass die Deskriptoren der Datenbank, die aus der ersten Tabelle redundanter Daten ausgeschlossen sind, ein zweites maximales Format haben und dadurch, dass das zweite maximale Format größer ist als das erste maximale Format.

4. Verfahren nach einem der vorhergehenden Ansprüche, **dadurch gekennzeichnet, dass** die Deskriptoren der Datenbank nach Fernsehservice und in chronologischer Reihenfolge klassiert sind.

5. Verfahren nach einem der vorhergehenden Ansprüche, **dadurch gekennzeichnet, dass** die aus der ersten Tabelle redundanter Daten ausgeschlossenen Deskriptoren Zusammenfassungen der Fernsehsendungen enthalten.

6. Verfahren nach einem der vorhergehenden Ansprüche, **dadurch gekennzeichnet, dass** das zweite hierarchische Klassement das Thema der Sendung als Deskriptorkategorie des höchsten Ranges verwendet.

7. Verfahren nach einem der Ansprüche 1 bis 5, **dadurch gekennzeichnet, dass** das zweite hierarchische Klassement den Abonnementtyp als Deskriptorkategorie des höchsten Ranges verwendet.

8. Verfahren nach einem der vorhergehenden Ansprüche, **dadurch gekennzeichnet, dass** mehrere Tabellen redundanter Daten verwendet werden, um dem Zuschauer ebenso viele mögliche Zugangsmodi der Deskriptoreneinheiten zusätzlich zu dem durch das erste hierarchische Klassement festgelegten Zugangsmodus zu bieten.

9. Digitales Signal, das gemultiplexte Signale umfasst, die an eine Vielzahl von Empfängern (3) gesendet werden und ein Fernsehserviceangebot bilden, wobei die übertragenen Signale Hauptsignale umfassen, die von jedem Empfänger genutzt werden können, um einem Zuschauer Fernsehsendungen zu liefern, und Nebensignale, die von jedem Empfänger genutzt werden können, um dem Zuschauer Informationen über die Fernsehsendungen zu liefern, wobei die Nebensignale Nebendaten codieren, die in Einheiten organisierte Deskriptoren (S1, J1, T1, E1 usw.) umfassen, von welchen sich jeder auf eine Fernsehsendung bezieht und verschiedene Deskriptorenkategorien umfasst (Service, Tag, Tagesabschnitt, Sendung usw.), wobei diese Deskriptoreneinheiten dem Zuschauer selektiv nach einem von mindestens zwei möglichen Zugangsmodi zugänglich gemacht werden, die jeweils von einem ersten und einem zweiten unterschiedlichen hierarchischen Klassement (Service, Tag, Tagesabschnitt, Sendung usw.; Thema, Service, Tag, Tagesabschnitt usw.) der verschiedenen Deskriptorenkategorien definiert werden, und wobei die Deskriptoreneinheiten eine Datenbank (Fig. 2) bilden, in der die Deskriptoren nach Kategorie gemäß dem ersten hierarchischen Klassement klassiert sind, **dadurch gekennzeichnet, dass** die Nebendaten außerdem mindestens eine erste Tabelle redundanter Daten (Fig. 5) umfassen, darunter entsprechende Untereinheiten (TH1, S3, J2, T4, E5) aller Deskriptoreneinheiten und unter Ausschluss der Deskriptoren (Nom5, Du5 usw.) mindestens einer Kategorie, wobei die Deskriptoren dieser Untereinheiten in dieser ersten Tabelle nach Kategorie gemäß dem zweiten hierarchischen Klassement (Thema, Service, Tag, Tagesabschnitt usw.) klassiert sind.

10. Signal nach Anspruch 9, **dadurch gekennzeichnet, dass** mindestens ein Teil der in der ersten Tabelle redundanter Daten enthaltenen Deskriptoren Lesekoordinaten bilden, die es erlauben, aus der Datenbank die Deskriptoren jeder Kategorie zu extrahieren, die in der ersten Tabelle redundanter Daten nicht vertreten sind.

11. Signal nach Anspruch 9 oder 10, **dadurch gekennzeichnet, dass** die Deskriptoren der ersten Tabelle redundanter Daten ein erstes maximales Format haben, dadurch, dass die Deskriptoren der Datenbank, die aus der ersten Tabelle redundanter Daten ausgeschlossen sind, ein zweites maximales Format haben, und dadurch, dass das zweite maximale Format größer ist als das erste maximale Format.

12. Signal nach einem der Ansprüche 9 bis 11, **dadurch gekennzeichnet, dass** die Deskriptoren der Datenbank nach Fernsehservice und in chronologischer Reihenfolge klassiert sind.

13. Signal nach einem der Ansprüche 9 bis 12, **dadurch gekennzeichnet, dass** die aus der ersten Tabelle redundanter Daten ausgeschlossenen Deskriptoren Zusammenfassungen der Fernsehsendungen umfassen.

14. Signal nach einem der Ansprüche 9 bis 13, **dadurch gekennzeichnet, dass** das zweite hierarchische Klassement das Thema der Sendung als Deskriptorkategorie des höchsten Ranges verwendet.

15. Signal nach einem der Ansprüche 9 bis 14, **dadurch gekennzeichnet, dass** das zweite hierarchische Klassement den Abonnementtyp als Deskriptorkategorie höchsten Ranges verwendet.

16. Signal nach einem der Ansprüche 9 bis 15, **dadurch gekennzeichnet, dass** es mehrere Tabellen redundanter Daten umfasst, um dem Zuschauer ebenso viele mögliche zugangsmodi zu den Deskriptoreneinheiten zusätzlich zu dem vom ersten hierarchischen Klassement festgelegten Zugangsmodus zu liefern.

17. Ausstattung (1) eines digitalen Fernsehnetzes mit Mitteln, die dazu geeignet sind, ein digitales Signal nach einem der Ansprüche 9 bis 16 zu erzeugen und zu senden.

18. Ausstattung (3) eines digitalen Fernsehnetzes, **dadurch gekennzeichnet, dass** sie Folgendes umfasst
Mittel zum Empfangen eines zusammengesetzten Signals, das ein digitales Signal nach einem der Ansprüche 9 bis 16 umfasst,
Mittel zum Erfassen der entsprechenden Tabelle redundanter Daten in Zusammenhang mit dem vom Benutzer ausgewählten Zugangsmodus ausgehend vom empfangenen digitalen Signal,
Mittel zum Extrahieren der Deskriptorenplätze aus der Tabelle der redundanten Daten und
Mittel zum direkten Zugreifen auf die in der ganzen Datenbank, die ausgehend vom empfangenen Signal erfasst wird, gesuchten Deskriptoren, um sie dem Benutzer zu präsentieren.

19. Ausstattung (3) eines digitalen Fernsehnetzes nach Anspruch 18, **dadurch gekennzeichnet, dass** das zusammengesetzte Signal ein Signal im Format MPEG2 TS ist.

## Claims

1. Digital television broadcasting process, in which a transmitter (1) transmits to a number of receivers (3) multiplex signals constituting a collection of television services, the transmitted signals consisting of the principal signals exploitable by each receiver in order to supply televised broadcasts to a television viewer, and appended signals exploitable by each receiver to supply a television viewer with information on the televised programmes, the appended signals coding the appended data comprising of descriptors organised in sets (S1, J1, E1, etc) each of which is related to a televised transmission and contains diverse categories of descriptors (Service, Day, Band, Transmission etc.), these descriptor sets being made selectively accessible to the television viewer according to any one of at least two possible means of access defined respectively by the first and second various hierarchical classifications (Service, Day, Band, Transmission, etc.; Theme, Service, Day Band, etc.) of the various categories of descriptors, a process in which all the descriptor sets form a database (Fig. 2) in which the descriptors are classified by category according to the first hierarchical classification, **characterised in that** the appended data consist furthermore of at least a primary superfluous table of data (Fig. 5) including respective sub-sets (TH1, S3, J2, T4, E5) of all the descriptor sets and excluding descriptors (Nom5, Du5, etc.) from at least one category, the descriptors of these sub-sets being, in this primary table, classified by category following the second hierarchical classification (Theme, Service, Day, band, etc.).

2. Process in accordance with claim 1, **characterised in that** in order to render the descriptor sets accessible to the television viewer according to the second possible method of access, the descriptors of each category not shown in the first superfluous table of data are extracted from the data base by using as reading coordinates in the data base one part at least of the descriptors included in this first superfluous table of data.

3. Process in accordance with claim 1 or 2, **characterised in that** the descriptors of the first superfluous table of data have a maximum first format, **in that** the database descriptors excluded from the first superfluous table of data have a second maximum format and **in that** the second maximum format is greater than the first maximum format.

4. Process in accordance with any one of the preceding claims, **characterised in that** the database descriptors are classified by television service and in chronological order.

5. Process according to any one of the preceding claims, **characterised in that** the descriptors excluded from the first superfluous table of data constitute summaries of the televised broadcasts.

6. Process according to any one of the preceding claims, **characterised in that** the second hierarchical classification uses the transmission theme as a higher hierarchical descriptor category.

7. Process according to any one of claims 1 to 5, **characterised in that** the second hierarchical classification uses the subscription method as a higher hierarchical descriptor category.

8. Process according to any one of the preceding claims, **characterised in that** several superfluous database tables are used to offer the television viewer as many methods of access possible from the descriptor sets as well as a method of access defined by the first hierarchical classification.

9. A digital signal consisting of multiplex signals transmitted to a number of receivers (3) and made up of a collection of television services, the transmitted signals consisting of principal signals exploitable by each receiver in order to deliver televised broadcasts to a television viewer, and appended signals exploitable by each receiver to provide the television viewer with information on televised programmes, the appended signals coding the appended data consisting of descriptors organised in sets (S1, J1, E1, etc) each of which is related to a televised broadcast and contains diverse categories of descriptors (Service, Day, Band, Transmission, etc.), these descriptor sets being rendered selectively accessible to the television viewer following any one of at least two methods of access possible defined respectively by the first and second different hierarchical classifications (Service, Day, Band, Transmission, etc.; Theme, Service Day, Band, etc.) of the various categories of descriptors and the whole of the descriptors forming a database (Fig. 2) in which the descriptors are classified by category following the first hierarchical classification, **characterised in that** the appended data consists, moreover of at least one primary table of superfluous data (Fig. 5) including some respective sub-sets (TH1, S3, J2, T4, E5) of all the descriptor sets and excluding descriptors (Nom5, Du5, etc.) of at least one category, the descriptors of these sub-sets being, in this primary table, classified by category according to the second hierarchical classification (Theme, Service, Day, Band, etc).

10. Signal according to claim 9, **characterised in that** at least one part of the descriptors included in the primary table of superfluous data make up reading coordinates, enabling the descriptors of each category not represented in the primary table of superfluous data to be extracted from the database.

11. Signal according to claim 9 or 10, **characterised in that** the descriptors of the primary table of superfluous data have a maximum initial format, and that the descriptors of the database excluded from the primary table of superfluous data have a second maximum format, and **in that** the second maximum format is greater than the first maximum format.

12. Signal in accordance with any one of claims 9 to 11, **characterised in that** the database descriptors are classified by television service and in chronological order.

13. Signal in accordance with any one of claims 9 to 12, **characterised in that** descriptors excluded from the primary table of superfluous data consist of summaries of televised programmes.

14. Signal in accordance with any one of claims 9 to 13, **characterised in that** the second hierarchical classification uses the transmission theme as a descriptor category of the highest hierarchy.

15. Signal in accordance with any one of claims 9 to 14, **characterised in that** the second hierarchical classification uses subscription as a descriptor category of the highest hierarchy.

16. Signal in accordance with any one of claims 9 to 15, **characterised in that** it consists of several superfluous tables of data offering the television viewer as many methods of access as possible for all the descriptors as well as a method of access defined by the first hierarchical classification.

17. Digital television network equipment (1), consisting of its own means of producing and emitting a digital signal in accordance with any one of claims 9 to 16.

18. Digital television network equipment (1), **characterised in that** it includes:
the means of receiving a composite signal including a digital signal according to any one of claims 9 to 16,
the means to acquire from the digital signal received, the corresponding table of superfluous data relative to the method of access selected by the user,
the means to extract from the superfluous table of data, the sighting of descriptors, and
the means to directly access, thanks to these sightings, the sought after descriptors in the complete database acquired from the said signal received, in order to present them to the user.

19. Digital television network equipment (3) in accordance with claim 18, **characterised in that** the said composite signal is a signal in the MPEG2 TS format.
